# DEMANDE DE BREVET EUROPEEN

(11) **EP 1 738 866 A1**
(43) Date de publication de la demande: **03.01.2007**
(21) Numéro de dépôt: 06290945.2
(22) Date de dépôt: 09.06.2006
(51) Int. Cl.: B23Q 11/00, B23B 51/04

(54) **Dispositif d'usinage comportant un outil cylindrique creux relié à un système d'aspiration des copeaux**

(30) Priorité: 28.06.2005 FR 0506543
(71) Demandeur: ROMER, 41800 Montoire sur le Loir (FR)
(72) Inventeur: Granger, Romain, 41800 Lavardin (FR)
(74) Mandataire: Jaunez, Xavier

(57) **Abrégé**

La présente invention concerne un dispositif d'usinage de pièces mécaniques au moyen d'un outil cylindrique creux présentant une extrémité distale dont le bord libre est conformé pour réaliser un usinage lorsque ledit outil est entraîné en rotation autour de son axe.

Conformément à l'invention, l'outil cylindrique creux (140) est équipé intérieurement d'un organe transversal (150) formant brise-copeaux, et ledit outil cylindrique creux est fixé axialement en bout d'une broche cylindrique creuse (120), ladite broche cylindrique creuse étant montée pour tourner autour de son axe (X) sur une platine de support (102), en étant attaquée extérieurement par des moyens motorisés d'entraînement en rotation (130) montés sur ladite platine de support, et ladite broche cylindrique creuse (120) ayant une extrémité proximale qui est en regard et au voisinage direct d'un embout cylindrique creux (105) fixé sur ladite platine de support et relié à une tubulure d'aspiration (110), de sorte que les copeaux d'usinage peuvent être évacués intérieurement en passant successivement dans l'outil cylindrique creux (140) en contournant l'organe transversal formant brise-copeaux, dans la broche cylindrique creuse (120), dans l'embout cylindrique creux (105) et dans la tubulure d'aspiration (110).

## Description

La présente invention concerne le domaine de l'usinage de pièces mécaniques au moyen d'un outil cylindrique creux présentant une extrémité distale dont le bord libre est conformé pour réaliser un usinage lorsque ledit outil est entraîné en rotation autour de son axe.

### ARRIERE-PLAN TECHNOLOGIQUE

Il est connu depuis déjà très longtemps d'usiner des pièces mécaniques en utilisant un outil cylindrique creux présentant une extrémité distale dont le bord libre est conformé pour réaliser un usinage lorsque ledit outil est entraîné en rotation atour de son axe, ce bord libre étant en général conformé en denture pour attaquer la matière de la pièce mécanique à usiner.

Dans le domaine des perceuses portatives, on a déjà proposé d'évacuer les copeaux par un canal central de l'outil de perçage et de la broche associée (voir par exemple le document US-A-4,711,609).

D'autres machines d'usinage sont parfois équipées d'un système d'aspiration centrale des copeaux (voir par exemple les documents DE-C-929 930, US-A-2 919 901 et DE-U-200 09 411).

On pourra également se référer, au titre de l'arrière-plan technologique, aux documents US-A-3,382,743 et EP-A-1 093 897.

Le dispositif d'usinage utilisé dépend naturellement du type de pièces mécaniques concernées, en particulier de ses dimensions et surtout du matériau constitutif de celles-ci. A ce titre, la réalisation de pièces mécaniques tridimensionnelles, par exemple de modèles en vraie grandeur de pièces de carrosserie de véhicules automobiles, a amené les spécialistes de ce domaine technique à abandonner les matériaux traditionnels tel que le bois pour se tourner vers des matériaux plastiques, en particulier le polystyrène.

Il est ainsi courant de réaliser des modèles tridimensionnels de composants de véhicules automobiles, en particulier de carrosserie, à partir d'une ébauche en polystyrène. Pour parvenir à une géométrie très précise de la pièce tridimensionnelle, il est nécessaire d'effectuer un usinage dont la précision est parfaitement contrôlée.

A cet effet, on utilise actuellement des robots de fraisage comportant une fraise d'usinage tournant à grande vitesse, par exemple de l'ordre de 20 000 tours/mn, le fraisage s'effectuant de façon précise par le déplacement commandé du robot au moyen d'une installation de commande numérique.

Or, de tels robots de fraisage présentent deux inconvénients majeurs, que l'on est pas parvenu à surmonter de façon satisfaisante.

Le premier inconvénient est celui du bruit, la haute vitesse de la fraise tournante entraînant en effet l'émission de bruits et de sifflements très aigus qui sont particulièrement pénibles pour le personnel environnant, lequel porte en général des casques de protection sonore, excluant de facto la présence sur le site d'autres personnes en raison de la gêne occasionnée.

Le deuxième inconvénient réside dans la génération de poussières relativement fines résultant des passes de fraisage, et l'évacuation de telles poussières pose des problèmes pratiques inhérents à la fois à la taille des particules, mais aussi à la charge électrostatique desdites particules qui collent plus ou moins aux équipements environnants, et en particulier au bras articulé du robot de fraisage. Ces poussières sont donc difficiles à évacuer, et il est en particulier exclu d'imaginer utiliser des techniques d'aspiration que l'on rencontre traditionnellement dans les installations de sciage du bois, avec une aspiration qui est nécessairement latérale du fait de la présence de l'arbre de sortie coaxial du moteur d'entraînement.

Enfin, outre les deux inconvénients majeurs précités, il convient de noter que le dispositif d'usinage équipant le robot de fraisage utilise un moteur d'entraînement adapté aux conditions de vitesses demandées, et par suite reste un composant à la fois onéreux et fragile. Enfin, une telle motorisation implique également la consommation d'une puissance électrique non négligeable pour l'installation.

### OBJET DE L'INVENTION

La présente invention vise à concevoir un dispositif d'usinage permettant de réaliser aisément des pièces mécaniques tridimensionnelles, sans présenter les inconvénients précités, en particulier évitant la création de bruits aigus et la génération de poussières d'usinage particulièrement collantes.

L'invention a également pour but de concevoir un dispositif d'usinage convenant tout particulièrement au travail de pièces mécaniques massives en polystyrène, notamment pour réaliser des modèles tridimensionnels de composants de véhicules automobiles.

### DEFINITION GENERALE DE L'INVENTION

Le problème précité est résolu conformément à l'invention grâce à un dispositif d'usinage de pièces mécaniques au moyen d'un outil cylindrique creux présentant une extrémité distale dont le bord libre est conformé pour réaliser un usinage lorsque ledit outil est entraîné en rotation autour de son axe, caractérisé en ce que l'outil cylindrique creux est équipé intérieurement d'un organe transversal formant brise-copeaux, et ledit outil cylindrique creux est fixé axialement en bout d'une extrémité distale d'une broche cylindrique creuse, ladite broche cylindrique creuse étant montée pour tourner autour de son axe sur une platine de support, en étant attaquée extérieurement par des moyens motorisés d'entraînement en rotation montés sur ladite platine de support, et ladite broche cylindrique creuse ayant une extrémité proximale qui est en regard et au voisinage direct d'un embout cylindrique creux fixé sur ladite platine de support et relié à une tubulure d'aspiration, de sorte que les copeaux d'usinage peuvent être évacués intérieurement en passant successivement dans l'outil cylindrique creux en contournant l'organe transversal formant brise-copeaux, dans la broche cylindrique creuse, dans l'embout cylindrique creux et dans la tubulure d'aspiration.

Ainsi, grâce à un tel agencement, on peut réaliser un usinage de pièces tridimensionnelles, en particulier des pièces massives en polystyrène, avec une génération de déchets qui ne sont plus constitués par des particules de poussières fines, mais par des copeaux dont le dimensionnement est de l'ordre de celui d'un petit pois. Ces gros copeaux sont alors facilement évacués par le conduit formé par l'outil, la broche, l'embout, et la tubulure d'aspiration. On parvient alors à un résultat tout à fait spectaculaire d'évacuation des copeaux d'usinage, avec une absence quasi totale de copeaux dans l'environnement extérieur du dispositif d'usinage. En outre, la présence de copeaux qui sont peaux qui sont dimensionnellement beaucoup plus gros que les poussières émises avec les techniques d'usinage traditionnelles, permet de diminuer considérablement les effets néfastes dus à l'électricité statique des particules de polystyrène.

En outre, grâce à la présence de l'organe transversal formant brise-copeaux, lorsque les copeaux formés lors de l'usinage se présentent sous la forme de lamelles de dimensions importantes ou de blocs massifs également assez volumineux, on parvient à diminuer les dimensions de tels copeaux de façon à faciliter l'évacuation au moyen d'une puissance d'aspiration constante, sans perturbation pour le flux de copeaux remontant à l'intérieur du couloir intérieur de la machine constitué par l'outil, la broche, l'embout, et la tubulure d'aspiration.

Conformément à un premier mode d'exécution, l'organe transversal formant brise-copeaux est constitué par un étrier en forme de U, dont les branches latérales s'étendent axialement contre la surface intérieure de l'outil cylindrique creux, et dont la branche centrale forme une lame transversale de coupe des copeaux aspirés dans ledit outil.

En variante, l'organe transversal formant brise-copeaux est constitué par un profilé s'étendant diamétralement à l'intérieur de l'outil cylindrique creux.

Avantageusement encore, l'outil cylindrique creux, la broche cylindrique creuse, l'embout cylindrique creux et la tubulure d'aspiration présentent sensiblement un même diamètre intérieur, de façon à former un conduit d'évacuation essentiellement continu pour les copeaux d'usinage. La continuité du conduit d'évacuation ainsi formé permet une aspiration régulière de la totalité de copeaux d'usinage générés lors de l'usinage, et ce sans requérir une puissance d'alimentation électrique importante pour les moyens d'entraînement motorisés.

On pourra en outre prévoir que le bord libre de l'outil cylindrique creux présente une denture, ou en variante est essentiellement lisse avec un affûtage coupant. Selon le type de travail demandé, le bord libre essentiellement lisse précité pourra présenter un profil circonférentiel linéaire à la manière d'un outil de coupe traditionnel, ou en variante présenter un profil circonférentiel ondulé de façon à éviter tout collage de la matière contre le chanfrein de coupe.

Ainsi que cela a été dit plus haut, le dispositif d'usinage comporte des moyens motorisés d'entraînement en rotation de la broche cylindrique creuse, lesquels moyens motorisés sont montés sur la platine de support.

On pourra prévoir que ces moyens motorisés d'entraînement en rotation sont constitués par un moteur monté latéralement par rapport à la broche cylindrique creuse, et une courroie reliant ladite broche à l'arbre de sortie dudit moteur. Le montage latéral permet d'assurer l'entraînement en rotation de la broche cylindrique creuse, sans interférer avec la formation du canal d'évacuation.

En variante, on pourra prévoir que les moyens motorisés d'entraînement en rotation sont constitués par un moteur du type à arbre creux, dont l'arbre creux est constitué par la broche cylindrique creuse elle-même. Là encore, l'arbre creux constitué par la broche cylindrique creuse fait partie du conduit d'évacuation des copeaux d'usinage par simple aspiration à l'intérieur dudit conduit.

Avantageusement enfin, le dispositif d'usinage est monté par sa platine en extrémité d'un bras articulé faisant partie d'un robot d'usinage à commande numérique.

D'autres caractéristiques et avantages de l'invention apparaîtront plus clairement à la lumière de la description qui va suivre et des dessins annexés, concernant un mode particulier de réalisation.

### BREVE DESCRIPTION DES DESSINS

Il sera fait référence aux figures des dessins annexés, où :
- la figure 1 est une vue en perspective illustrant un dispositif d'usinage conforme à l'invention monté en extrémité d'un bras articulé faisant partie d'un robot d'usinage à commande numérique ;
- la figure 2 est une vue, à plus grande échelle, du dispositif d'usinage précité, dont on distingue mieux les composants essentiels ;
- la figure 3 est une vue en perspective, et en coupe axiale, du dispositif de la figure 2, permettant de bien distinguer la formation d'un conduit continu d'évacuation des copeaux d'usinage par simple aspiration ;
- la figure 4 est une vue partielle en perspective, permettant de mieux distinguer l'outil cylindrique creux dont le bord libre présente ici une denture, avec son organe transversal formant brise-copeaux ;
- la figure 5 est une vue analogue à celle de la figure 4, prise en coupe axiale de façon à mieux distinguer la géométrie particulière de l'organe transversal formant brise-copeaux qui est en l'espèce réalisé sous la forme d'un étrier en forme de U ;
- la figure 6 est une variante de la figure 5, illustrant un bord libre ne présentant pas de denture, mais essentiellement lisse et avec un affûtage coupant, avec en outre ici un profilé circonférentiel ondulé ;
- la figure 7 est une vue en perspective analogue à celle de la figure 1, illustrant une variante dans laquelle les moyens motorisés d'entraînement en rotation sont constitués par un moteur du type à arbre creux, dont l'arbre creux est justement constitué par la broche cylindrique creuse elle-même.

### DESCRIPTION DETAILLEE DES MODES DE REALISATION PREFERES

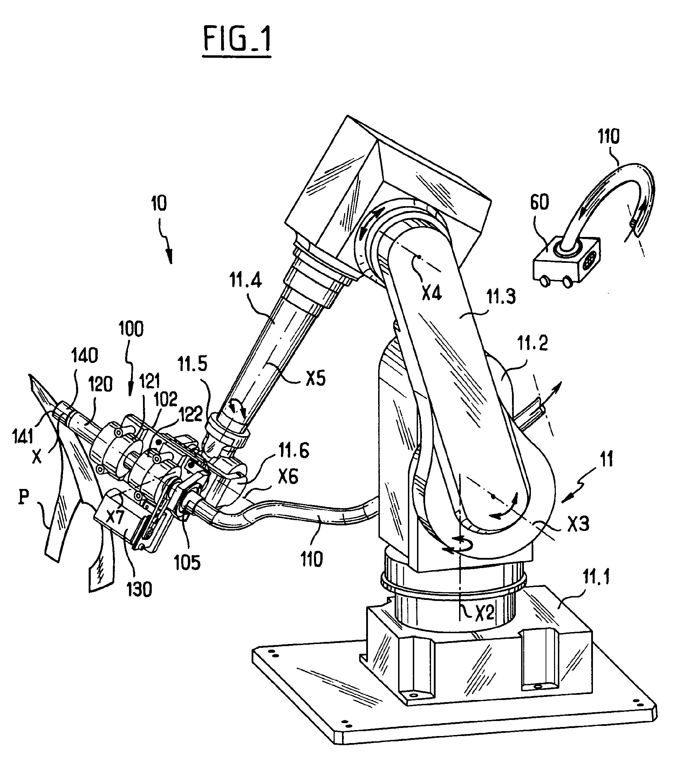

Sur la figure 1, on distingue un dispositif d'usinage noté 100 conforme à l'invention, destiné à usiner des pièces mécaniques tridimensionnelles, en particulier une pièce notée P qui est ici un modèle tridimensionnel de carrosserie de véhicule automobile (en l'espèce une aile avant gauche), à partir d'une pièce massive réalisée en polystyrène. Le domaine d'application mentionné en l'espèce correspond à celui du design automobile, mais il ne s'agit naturellement que d'un exemple, étant entendu que l'invention entend s'appliquer à tout type d'usinage de pièces mécaniques au moyen d'un outil cylindrique creux rotatif.

Le dispositif d'usinage 100 est en l'espèce monté par sa double platine 101, 102 en extrémité d'un bras articulé 11 faisant partie d'un robot d'usinage 10 à commande numérique.

Le robot d'usinage à bras articulé comporte une embase 11.1, surmontée d'une tourelle 11.2 pouvant tourner autour d'un axe essentiellement vertical X2, laquelle tourelle est équipée latéralement d'un bras pivotant 11.3 monté pour tourner autour d'un axe essentiellement horizontal X3. A l'autre extrémité du bras pivotant 11.3, il est prévu un autre bras 11.4 pouvant tourner autour d'un axe essentiellement horizontal X4. En extrémité de ce bras 11.4, il est prévu une extrémité 11.5 qui est montée pour tourner autour de l'axe central X5 du bras 11.4, laquelle extrémité comporte une chape 11.6 montée pour tourner autour d'un axe X6. Enfin, un porte-outil (non visible sur les figures) est prévu sur la chape 11.6, avec possibilité de tourner autour d'un axe central X7 qui est perpendiculaire au plan de ladite chape, c'est-à-dire perpendiculaire à l'axe X6 de cette chape 11.6.

Le porte-outil précité permet en l'espèce de monter une double platine 101, 102 sur la chape précitée 11.6, laquelle double platine est destinée à supporter le dispositif d'usinage 100 qui sera décrit plus en détail ci-après.

Il va de soi que le robot d'usinage à bras articulé du type 6 axes qui est illustré ici n'est cité qu'à titre d'exemple, et l'on pourra faire appel à tout autre type de robot à bras articulé multiaxes à commande numérique ou non, ou en variante prévoir un système mobile de support pour un travail plus léger effectué directement par l'opérateur (variante non illustrée ici).

La commande du robot d'usinage à bras articulé 11 permet de positionner et d'orienter dans toutes les positions spatiales désirées le dispositif d'usinage 100, et en particulier son outil cylindrique creux qui présente une extrémité distale dont le bord libre est conformé pour réaliser un usinage lorsque ledit outil est entraîné en rotation autour de son axe.

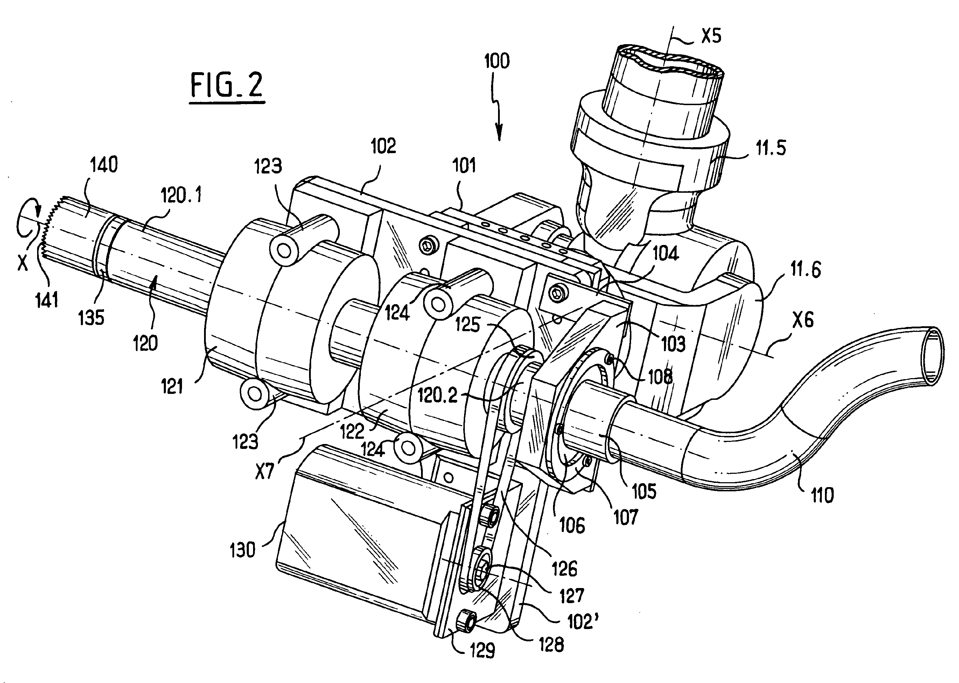

On va maintenant se référer aux figures 2 à 4 pour décrire plus en détail les composants essentiels du dispositif d'usinage 100 précité.

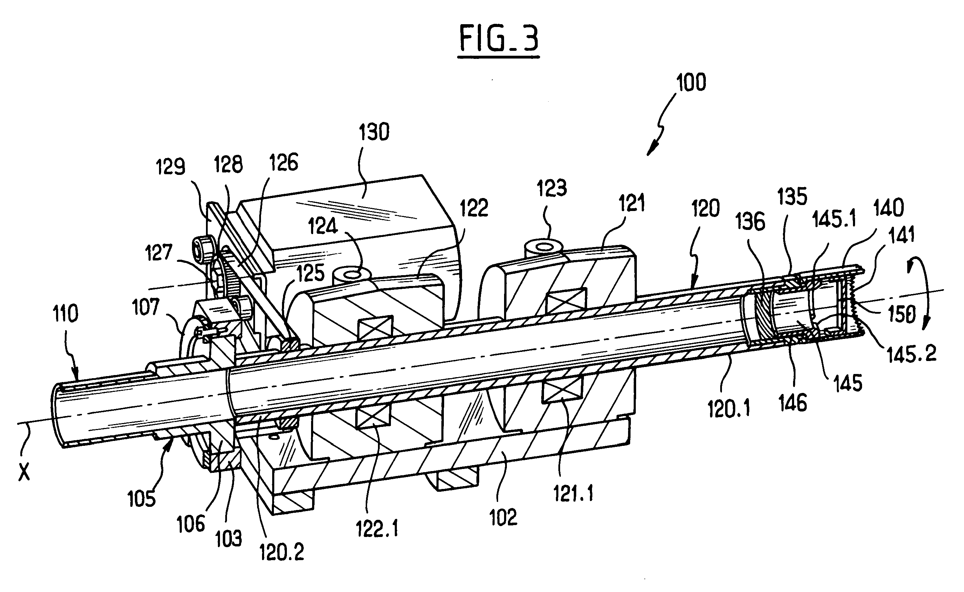

Le dispositif d'usinage 100 comporte un outil cylindrique creux 140 qui est fixé coaxialement en bout d'une extrémité distale 120.1 d'une broche cylindrique creuse 120. Cette broche cylindrique creuse 120 est montée pour tourner autour de son axe X sur la platine de support 102, en étant attaquée extérieurement par des moyens motorisés d'entraînement en rotation montés sur ladite platine de support. En l'espèce, on a prévu un système à double palier 121, 122 espacés axialement le long de l'axe X, pour supporter en rotation libre la broche cylindrique creuse 120. Les paliers 121 et 122 sont ici fixés rigidement et avec anti-rotation par des doigts associés respectivement 123 et 124 montés sur une chape qui est fixée sur la platine 102. Chacun des paliers 121, 122 renferme par exemple un roulement central respectivement 121.1 et 122.1 qui sont seulement esquissés sur la figure 3. La broche cylindrique 120 est ainsi parfaitement maintenue en pouvant tourner autour de son axe principal X.

La broche cylindrique creuse 120 présente en outre une extrémité proximale notée 120.2, qui est en l'espèce équipée d'une poulie 125 solidaire en rotation de ladite broche. La platine 102 présente ici une extension latérale 102' sur laquelle est montée une équerre 129 supportant un moteur électrique 130 qui est ainsi monté latéralement par rapport à la broche cylindrique creuse 120. L'arbre de sortie 127 du moteur 130 est équipé d'un pignon 128 sur lequel passe une courroie d'entraînement 126, laquelle passe également autour de la poulie crantée ou non 125 qui est solidaire en rotation de la broche cylindrique 120. La commande du moteur 130 permet donc d'entraîner en rotation, à la vitesse désirée, la broche cylindrique creuse 120 et l'outil cylindrique associé 140.

L'outil cylindrique creux 140 est équipé intérieurement d'un organe transversal 150 formant brise-copeaux, afin de garantir un dimensionnement maximum des copeaux d'usinage, et par suite la régularité du flux entraîné par l'air d'aspiration au travers du conduit d'évacuation des copeaux d'usinage.

Contrairement aux dispositifs d'usinage traditionnels, qui utilisent un outil d'usinage tournant à haute vitesse, par exemple 20 000 tours/mn, on pourra ici se satisfaire de vitesses de rotation beaucoup plus faibles, par exemple 500 à 600 tours/mn, dans la mesure où de telles vitesses sont tout à fait suffisantes pour effectuer un usinage avec génération de gros copeaux qui sont évacués au fur et à mesure de l'avancement de l'usinage. Compte tenu des faibles efforts et des faibles vitesses de rotation d'entraînement concernées, on pourra se contenter de moteurs de faible puissance électrique, par exemple de l'ordre de 300 watts, lesquels moteurs sont peu onéreux et surtout légers.

L'extrémité proximale 120.2 de la broche cylindrique creuse 120 est en regard et au voisinage direct d'un embout cylindrique creux 105 fixé sur la platine de support 102 et relié à une tubulure d'aspiration 110.

En l'espèce, on a prévu une console 103 fixée par des pattes 104 sur la platine 102, laquelle console supporte l'embout 105 par son embase cylindrique 106, laquelle embase est fixée par une couronne 107 maintenue par des boulons 108.

L'embout cylindrique 105 se prolonge par une tubulure d'aspiration 110 qui permet l'évacuation des copeaux d'usinage, éventuellement jusqu'à un site éloigné du robot. On pourra naturellement prévoir que l'embout 105 est raccordé par des moyens démontables à la tubulure d'aspiration 110, ou que ledit embout fait partie intégrante de la tubulure 110.

Grâce à un tel agencement, les copeaux d'usinage peuvent être évacués intérieurement en passant successivement dans l'outil cylindrique creux 140 en contournant l'organe transversal 150 formant brise-copeaux, dans la broche cylindrique creuse 120, dans l'embout cylindrique creux 105, et dans la tubulure d'aspiration 110.

Sur la figure 1, on a illustré schématiquement une installation d'aspiration représentée par un aspirateur 60 sur lequel est monté l'autre extrémité de la tubulure d'aspiration 110. Bien entendu, on pourra utiliser tout type de tubulure d'aspiration à géométrie souple et annelée en matière plastique, laquelle tubulure pourra éventuellement courir le long des parois et/ou du plafond du site d'usinage, afin de disposer les organes d'aspiration en un endroit éloigné du site d'usinage. De façon tout à fait surprenante, un tel agencement permet l'évacuation parfaite des copeaux d'usinage au fur et à mesure de l'usinage de la pièce, de sorte que le site d'usinage reste particulièrement propre. En outre, l'utilisation d'un petit moteur électrique de faible puissance permet d'avoir un fonctionnement extrêmement peu bruyant, et l'on peut citer un niveau de bruit de l'ordre de 78 décibels, ce qui est tout à fait remarquable et permet la présence sur le site d'usinage d'autres personnes qui ne sont aucunement incommodées lors de l'usinage proprement dit.

Ainsi que cela est mieux visible sur la coupe de la figure 3, il est avantageux de prévoir que l'outil cylindrique creux 140, la broche cylindrique creuse 120, l'embout cylindrique creux 105, et la tubulure d'aspiration 110 présentent sensiblement un même diamètre intérieur, de façon à former un conduit d'évacuation essentiellement continu pour les copeaux d'usinage. Ceci ne constitue naturellement aucune obligation, mais la continuité du conduit intérieur permet d'éviter des variations de sections qui pourraient perturber l'écoulement continu des copeaux d'usinage évacués par ledit conduit.

La figure 3 permet également de mieux distinguer le mode de fixation démontable de l'outil cylindrique creux 140 sur l'extrémité distale 120.1 de la broche cylindrique creuse 120.

On distingue en effet un manchon terminal 135 qui est fixé à demeure, par exemple, par frettage, sur l'extrémité distale 120.1 de la broche cylindrique creuse 120, en étant en appui par une collerette visible extérieurement, lequel manchon 135 présente un filetage intérieur 136. Une vis creuse 145 présentant un filetage extérieur 146, peut ainsi être vissée dans le manchon 135, et maintenir, par sa collerette 145.1 l'outil cylindrique creux 140. En l'espèce, la vis creuse 145 présente des ergots terminaux 145.2 permettant une manoeuvre au moyen d'une clé à ergots passant à l'intérieur de l'outil cylindrique creux 140. Il est ainsi possible de démonter et remonter rapidement un outil d'usinage, notamment lorsque l'on veut changer de type d'usinage, et passer d'un outil à denture à un outil présentant une autre denture ou exempt de denture au niveau du bord libre noté 141 dudit outil.

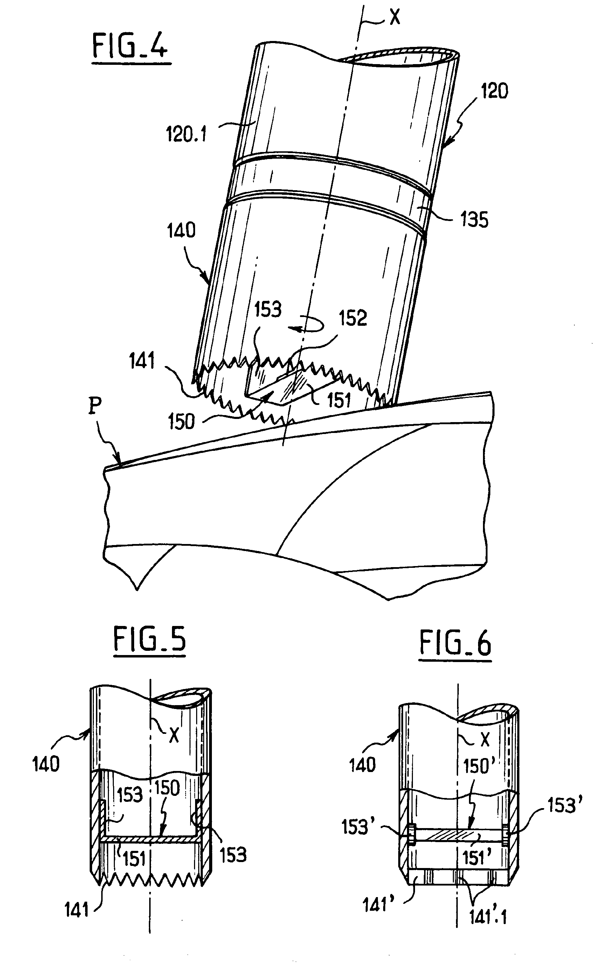

La vue de détail de la figure 4 permet de distinguer l'organe transversal 150 formant brise-copeaux, lequel organe transversal est en l'espèce constitué par un étrier en forme de U. L'agencement et la géométrie de cet étrier 150 sont mieux visibles sur la coupe de la figure 5. On distingue ainsi les branches latérales 153 qui s'étendent axialement contre la surface intérieure de l'outil cylindrique creux 140, par exemple en pouvant tenir par simple élasticité de la matière ressort, ou en variante au moyen d'une fixation mécanique non représentée ici. La branche centrale notée 151 forme une lame transversale de coupe des copeaux aspirés dans l'outil 140. Il sera avantageux de prévoir un bord tranchant 152 sur au moins une partie de la longueur de la branche centrale 151. L'étrier en forme de U 150 sera en général positionné à faible distance du bord actif d'usinage 141 qui est ici à denture. Ainsi, dès que le copeau se forme à l'intérieur de l'outil cylindrique creux 140, ce copeau est immédiatement soumis à l'action de l'organe brise-copeaux 150, et son évacuation s'effectue tout naturellement.

En variante, comme illustré sur la figure 6, on pourra prévoir un organe brise-copeaux constitué par un profilé 150' s'étendant diamétralement à l'intérieur de l'outil cylindrique creux 140, avec un bord d'attaque 151', ledit profilé étant fixé par des appuis 153' à la paroi interne de l'outil cylindrique creux 140. Sur la figure 6, on a également illustré une variante de la géométrie du bord libre 141 de l'outil cylindrique 140, variante dans laquelle ce bord libre, noté 141', est essentiellement lisse avec un affûtage coupant. Ce bord libre lisse 141' pourra présenter un profil circonférentiel linéaire, ou en variante, comme cela est illustré sur la figure 6, présenter un profil circonférentiel ondulé, avec des bosses périodiques 141'.1 à la façon des couteaux de charcuterie, afin d'éviter tout risque de collage de la matière sur la face interne du bord lisse actif.

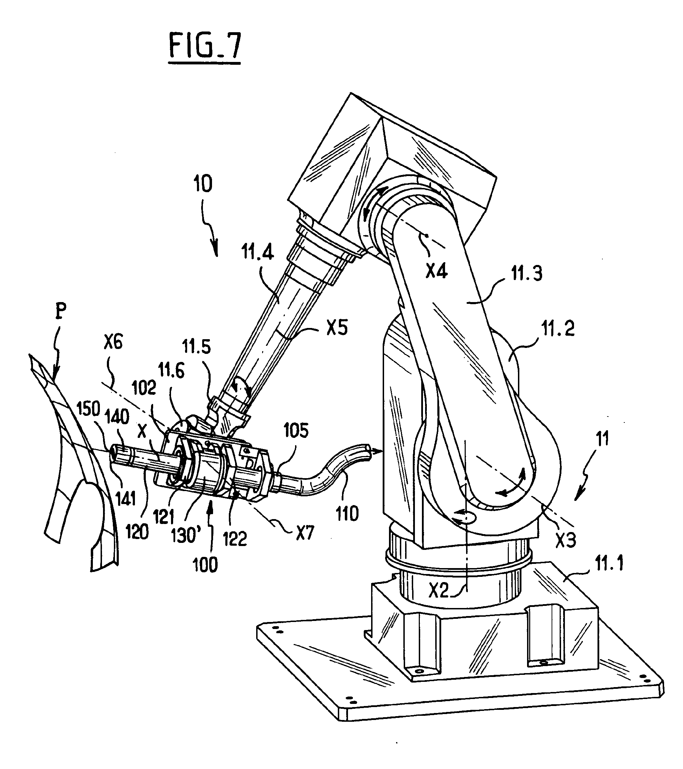

Dans le mode de réalisation qui vient d'être décrit, les moyens motorisés d'entraînement en rotation sont constitués par un moteur 130 qui est monté latéralement par rapport à la broche cylindrique creuse 120. On pourra en variante prévoir un agencement différent, comme cela est illustré sur la figure 7.

Sur cette figure, les moyens motorisés d'entraînement en rotation sont constitués par un moteur 130' qui est du type à arbre creux, dont l'arbre creux est constitué par la broche cylindrique creuse 120 elle-même. Dans ce cas, le moteur 130' est fixé sur la platine 102 entre les deux paliers 121, 122 qui supportent la broche cylindrique creuse 120, ce qui permet aussi d'avoir un montage plus compact. Le fait que la broche cylindrique creuse constitue l'arbre creux entraîné du moteur 130' permet alors d'organiser la même évacuation par aspiration des copeaux d'usinage.

Bien entendu, dans tous les cas, il conviendra de prévoir un intervalle aussi faible que possible entre le bord libre de l'extrémité proximale 120.2 de la broche cylindrique 120 et le bord libre en regard qui fait partie de l'embout cylindrique creux 105. En effet, on est en présence d'une partie tournante qui est en regard d'une partie fixe, lesquelles constituent des pièces complémentaires formant un conduit d'évacuation essentiellement continu, de sorte qu'il faut éviter tout passage intempestif de copeaux par l'intervalle séparant la pièce fixe de la pièce mobile, et il faut également éviter toute perte de la puissance d'aspiration servant à aspirer les copeaux d'usinage.

On est ainsi parvenu à réaliser un dispositif d'usinage extrêmement performant, permettant de travailler des matériaux relativement délicats, tels que le polystyrène, en fonctionnant avec des vitesses de rotation basses, par exemple de l'ordre de 500 à 600 tours/mn, et avec une puissance de motorisation également modeste, par exemple de l'ordre de 300 watts. Le travail s'effectue avec un bruit extrêmement faible qui ne constitue aucunement une gêne pour le personnel environnant. Enfin, l'évacuation continue des copeaux d'usinage sans présence de particules chargées par l'électricité statique, permet d'avoir un site d'usinage extrêmement propre et par suite très satisfaisant.

L'invention n'est pas limitée aux modes de réalisation qui viennent d'être décrits, mais englobe au contraire toute variante reprenant, avec des moyens équivalents, les caractéristiques essentielles énoncées plus haut.

Bien que cela ne soit pas décrit ici, on pourra par exemple prévoir d'équiper la chape terminale 11.6 du bras articulé 11 d'un équipement supplémentaire (non représenté), tel qu'une ponceuse, ce qui permet alors, par simple débranchement de la tubulure d'aspiration 110 du dispositif d'usinage 100, et rebranchement de ladite tubulure sur l'accessoire tel que ponceuse, et par simple pivotement de la chape terminale, d'avoir un équipement de finition immédiatement disponible dans la zone de la pièce qui vient d'être usinée.

## Revendications

1. Dispositif d'usinage de pièces mécaniques au moyen d'un outil cylindrique creux présentant une extrémité distale dont le bord libre est conformé pour réaliser un usinage lorsque ledit outil est entraîné en rotation autour de son axe, **caractérisé en ce que** l'outil cylindrique creux (140) est équipé intérieurement d'un organe transversal (150, 150') formant brise-copeaux, et ledit outil cylindrique creux est fixé axialement en bout d'une extrémité distale (120.1) d'une broche cylindrique creuse (120), ladite broche cylindrique creuse étant montée pour tourner autour de son axe (X) sur une platine de support (102), en étant attaquée extérieurement par des moyens motorisés d'entraînement en rotation (130, 130') montés sur ladite platine de support, et ladite broche cylindrique creuse (120) ayant une extrémité proximale (120.2) qui est en regard et au voisinage direct d'un embout cylindrique creux (105) fixé sur ladite platine de support et relié à une tubulure d'aspiration (110), de sorte que les copeaux d'usinage peuvent être évacués intérieurement en passant successivement dans l'outil cylindrique creux (140) en contournant l'organe transversal (150, 150') formant brise-copeaux, dans la broche cylindrique creuse (120), dans l'embout cylindrique creux (105) et dans la tubulure d'aspiration (110).

2. Dispositif selon la revendication 1, **caractérisé en ce que** l'organe transversal (150) formant brise-copeaux est constitué par un étrier en forme de U, dont les branches latérales (153) s'étendent axialement contre la surface intérieure de l'outil cylindrique creux (140), et dont la branche centrale (152) forme une lame transversale de coupe des copeaux aspirés dans ledit outil.

3. Dispositif selon la revendication 1, **caractérisé en ce que** l'organe transversal (150') formant brise-copeaux est constitué par un profilé s'étendant diamétralement à l'intérieur de l'outil cylindrique creux (140).

4. Dispositif selon l'une des revendications 1 à 3, **caractérisé en ce que** l'outil cylindrique creux (140), la broche cylindrique creuse (120), l'embout cylindrique creux (105) et la tubulure d'aspiration (110) présentent sensiblement un même diamètre intérieur, de façon à former un conduit d'évacuation essentiellement continu pour les copeaux d'usinage.

5. Dispositif selon l'une des revendications 1 à 4, **caractérisé en ce que** le bord libre (141) de l'outil cylindrique creux (140) présente une denture.

6. Dispositif selon l'une des revendications 1 à 4, **caractérisé en ce que** le bord libre (141') de l'outil cylindrique creux est essentiellement lisse avec un affûtage coupant.

7. Dispositif selon la revendication 6, **caractérisé en ce que** le bord libre lisse (141') présente un profil circonférentiel linéaire.

8. Dispositif selon la revendication 6, **caractérisé en ce que** le bord libre lisse (141') présente un profil circonférentiel ondulé.

9. Dispositif selon l'une des revendications 1 à 8, **caractérisé en ce que** les moyens motorisés d'entraînement en rotation sont constitués par un moteur (130) monté latéralement par rapport à la broche cylindrique creuse (120), et une courroie (126) reliant ladite broche à l'arbre de sortie dudit moteur.

10. Dispositif selon l'une des revendications 1 à 8, **caractérisé en ce que** les moyens motorisés d'entraînement en rotation sont constitués par un moteur(130') du type à arbre creux, dont l'arbre creux est constitué par la broche cylindrique creuse elle-même (120).

11. Dispositif selon l'une des revendications 1 à 10, **caractérisé en ce qu'**il est monté par sa platine (101, 102) en extrémité d'un bras articulé (11) faisant partie d'un robot d'usinage (10) à commande numérique.
